# EUROPEAN PATENT SPECIFICATION

(11) **EP 0 459 438 B1**
(45) Date of publication and mention of the grant of the patent: **23.08.1995**
(21) Application number: 91108784.9
(22) Date of filing: 29.05.1991
(51) Int. Cl.: B42D 9/04

(54) **Printer and page turning apparatus for passbooks or the like**
Schnelldrucker und Vorrichtung zum Umblättern für Bankbücher oder dergleichen
Imprimante et dispositif tourne-feuilles pour livrets bancaires ou analogues

(30) Priority: 30.05.1990 JP 138220/90
(43) Date of publication of application: 04.12.1991
(73) Proprietor: HITACHI, LTD., Chiyoda-ku, Tokyo 101 (JP)
(72) Inventor: Mochizuki, Akira, Chiyodamura, Niihari-gun, Ibaraki-ken (JP)
(74) Representative: Beetz & Partner Patentanwälte

(56) References cited:
- GB-A- 2 104 493
- GB-A- 2 222 819
- US-A- 4 870 258
- Patent Abstracts of Japan vol. 14, no. 276 (M-984)(4219) June 14, 1990; & JP-A-02 081 693 (FUJITSU LTD ) March 22, 1990
- Patent Abstracts of Japan vol. 14, no. 140 (M-950)(4083) March 16, 1990; & JP-A-02 006 185 (NEC CORP ) January 10, 1990
- Patent Abstracts of Japan vol. 14, no. 56 (M-929)(3999) January 31, 1990; & JP-A-01 281 998 (HITACHI )

## Description

The invention relates to a page-turning apparatus and a printer for passbooks or the like.

The page-turning apparatus described in the preamble of claim 1 is known from Japanese Patent Abstract No. 2-81693 (A). In particular, the invention relates to a page-turning apparatus suitable for passbook printers built in terminal apparatuses or passbook issuing machines handled by tellers of the banks or other financial agencies.

In the banks and other financial agencies, there are installed cash dispenser, cash depositer, Automated Teller Machine (ATM) and other banking terminals that the customer uses. These machines have a passbook printer built in for entering the amounts of transactions in the passbooks.

Likewise, in the banks and other financial agencies, there are passbook issuing machines used by the tellers.

Generally, the passbooks have double-spread pages, and if there is no column to enter the sum of transaction on a given page of the passbook, it is necessary to turn over the page to open the next page. For turning over pages, there are two methods: the user opens a desired page previously and inserts the passbook into the machine; or the automatic page-turning device in the passbook printer or in the passbook issuing machine does a page-turning job.

As an example of the prior art automatic page-turning machine in this kind of printer for passbooks or the like, there is a well-known apparatus disclosed in U.S. Pat. No. 4,280,036. This apparatus has a passbook pressing member, and, when turning over a page, causes the pressing member to be pressed against the passbook, thereby bringing the page-turning roller into contact with the cover or an intermediate page. A frictional force is produced between the page-turning roller and the cover or the intermediate page of the passbook, and the page-turning roller is rotated clockwise to make the uppermost sheet displaced in the direction of the binding line of the passbook and, therefore, curved upwards to be turned over. For this page-turning operation, a sheet to be turned over is assumed to be flat, and the pressing member is controlled so that the frictional force to be produced is greater than the resistance of the uppermost sheet but is in a magnitude not to cause the other sheets - under the uppermost sheet - to be turned over. Each time a page is turned over, the passbook is moved into and out of the set position for paging.

The problem with the prior art apparatus is that the pressing member has to be installed to press the page-turning roller against the page of the passbook on which data is entered. Specifically, the pressing member needs to apply an optimal force between the page-turning roller and the sheet surface to such an extent as not to cause a paging error. Adjustment for setting this optimal pressing force is difficult (in other words, variation is likely to occur among apparatuses manufactured). To meet the above requirement, the composition of the apparatus has to be complex. In addition, the presence of this pressing member itself in a limited space of the terminal apparatus requires greater time and labor in the manufacturing process. Thus, the production cost is higher, and an increased number of parts causes a greater difficulty in assuring the reliability of the apparatus.

In a passbook or the like, which has a complicated initial shape, a sheet of this passbook will exhibit resistance several to more than ten times greater than the resistance of a sheet of a passbook which is flat. In this case, the sheets sometimes cannot be turned over.

The Japanese Patent Abstract No. 2-81693 (A) discloses a device for automatically turning over a page. The apparatus comprises a transfer path, page turning means and pushing-up-means for generating bend deformation in a specific direction to the booklet to be printed.

Document GB-A-2 104 493 describes a page-turner in a printing apparatus. The printing apparatus comprises printing means, page-turning means and a shutter movable between the printing means and the page-turning means for guiding a book.

It is the object of the invention to provide a page-turning apparatus and a passbook printer which are highly reliable and which perform a stable turning over of sheets of a passbook or the like which has an initial irregularity in shape.

This object is solved in accordance with the features of claim 1. Dependent claims are directed on preferred embodiments of the invention.

According to this invention, the friction-applying part of the page-turning means generates an optimal frictional force - necessary for turning over of a sheet - for various thicknesses of the passbook or the like, and reduces the effect of the initial irregularity in shape of the passbook or the like and enables a highly reliable page-turning operation.
Fig. 1 is a side view of an example of the page-turning mechanism of a passbook printer as an embodiment of the printer for passbooks or the like of this invention;
Figs. 2 and 3 are views showing a passbook or the like such as a passbook to be handled;
Fig. 4 is a diagram showing the relation between the compression amount and the resistance of the page-turning roller;
Figs. 5 to 15 are diagrams for explaining an example of motion of the page-turning mechanism of Fig. 1;
Fig. 16 is a schematic diagram of the passbook printer as an embodiment of this invention;
Fig. 17 is an example of control flow of the passbook printer of Fig. 16; and shows essential parts of an example of control flow.

Preferred embodiments of this invention will be described with reference to the accompanying drawings.

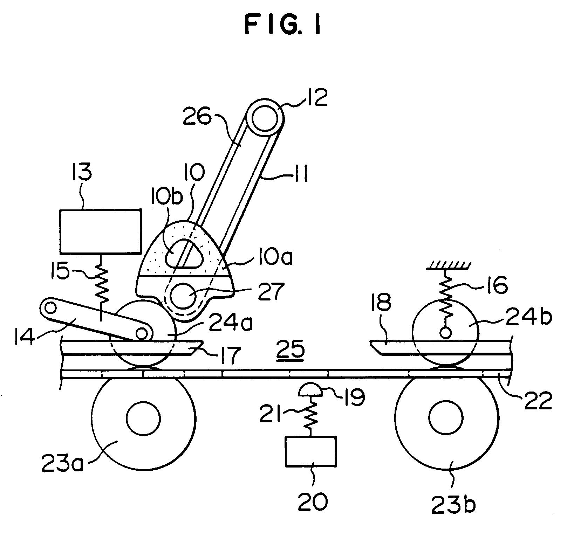

Fig. 1 is a side view of the page-turning mechanism in a passbook printer as an embodiment of the passbook or the like printer according to this invention.

A transfer path 25 for transferring a passbook into and out of the page-turning mechanism is formed by transfer rollers 23a, 23b, transfer rollers 24a, 24b kept in contact with the transfer rollers 23a, 23b by springs 15, 16, a paper pan 22 as a first guide, and paper pans 17, 18 as a second guide. In the vicinity of the transfer path 25, there is provided a page-turning roller 10 having a hollow-structured friction contact part 10a. This page-turning roller 10 is supported rotatably on an extreme end side of an arm 26 pivotably mounted to a shaft 12, and is turned about a shaft 27 at the extreme end of the arm 26 in the clockwise or counterclockwise direction by a drive-transmission belt 11 driven by a drive source, not shown. the above-mentioned friction contact part 10a is made of a material with a friction coefficient of about one or more, such as natural rubber or butadiene rubber. The above-mentioned transfer roller 24a is supported rotatably to the extreme end of a link 14 mounted pivotably, and can be detached from the transfer roller 23a by the operation of a drive source 13 through a spring 15 and the link 14. In the vicinity of the transfer path 25, there is provided a push guide 19 at a position separate from a start position of a page-turning operation by the page-turning roller 10 and on the side across the transfer path 25 from the page-turning roller 10. This push guide 19 gives a deformation to a passbook when a sheet is turned over. The amount of movement of the push guide 19 is given by a spring 21 and a drive source 20.

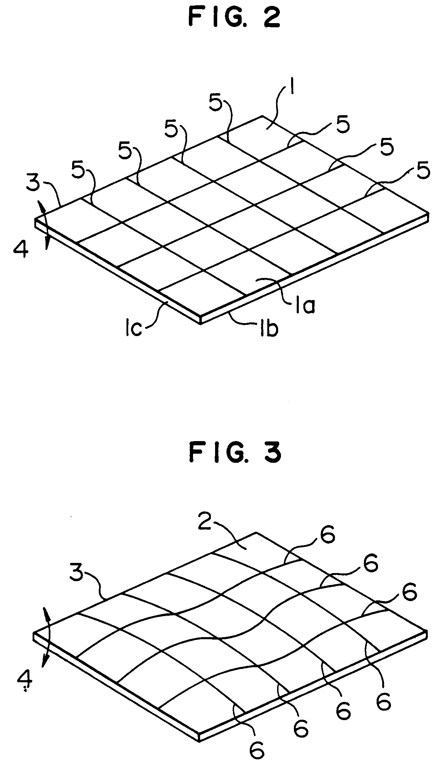

Fig. 2 shows a passbook 1 without an initial irregularity in shape, while Fig. 3 shows a passbook 2 with an initial irregularity in shape. In Figs. 2, 3, the passbook is closed. The passbook 1 comprises a top sheet 1a, a rear sheet 1b, and middle sheets 1c. Those sheets have been bounded by a binding line 3. The page-turning direction is indicated by an arrow 4. To represent the flatness of the passbook 1, auxiliary lines 5 are shown on the passbook 1. As is well-known in strength of materials, the buckling load of a flat, plate-like element such as the passbook 1 can be approximated by Euler equation.

As shown in Fig. 3, however, in the passbook 3 with an initial irregularity, the buckling load is several to several tens times greater than the value obtained by Euler equation mentioned above. The diagram of Fig. 3 was obtained by moire analysis of an actual passbook.

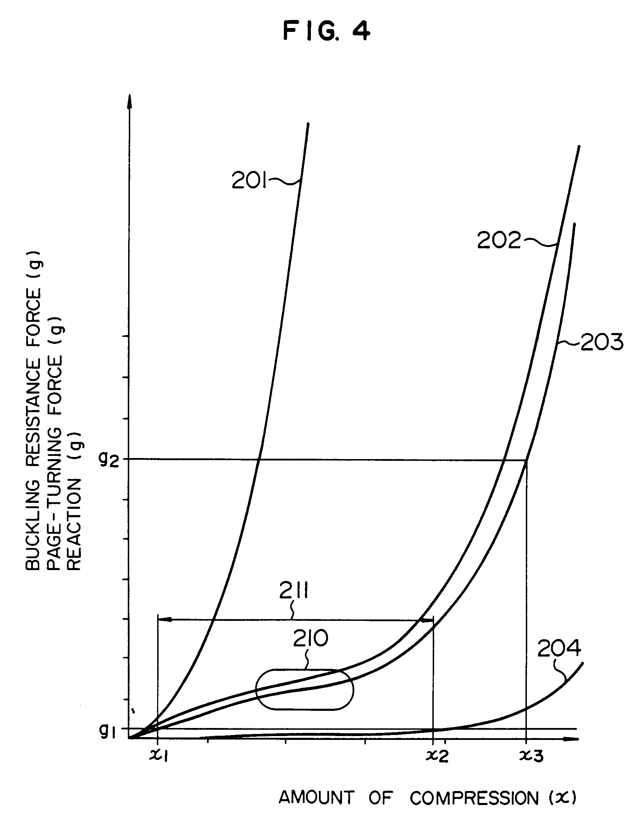

In Fig. 4, the axis of abscissa represents the amount of compression of the friction contact part 10a of the page-turning roller 10, while the axis of ordinates represents the reaction, the buckling resistance force and the turning force that occur when the friction contact part 10a of the page-turning roller 10 is compressed.

A curve 201 of Fig. 4 shows the relation between the reaction and the amount of compression of the prior-art page-turning roller whose friction contact part 10a has no hollow portion. For the above-mentioned page-turning roller 10 with the friction contact part 10a structured to have a hollow portion 10b, the reaction - compression amount curve 202 has a non-linear inflection point as shown in Fig. 4. In this curve 202, there is a region 210 very insensitive to the compression amount X. This compression amount X is the amount of the page-turning roller 10 being compressed and deformed. While being in contact with a sheet of a passbook, the page-turning roller 10 turns it over by a frictional force. The page-turning force can be approximated by a product of a vertical resistance of the deformation reaction of the friction contact part 10a and a friction coefficient of the friction contact part 10a. This page-turning force is represented by a curve 203. A force of turning over the next sheet adjacent to the sheet which is being turned over is a difference of two frictional forces: one between the sheet being turned over and the next sheet beneath it and the other between the next sheet and the second next sheet in contact therewith. This page-turning force is shown by a curve 204.

Next, with reference to Fig. 4, description will be made of the range of the amount of compression in which only one sheet of a passbook 1 that is to be turned over can be turned over steadily. In the range where the curve 204 does not exceed a buckling resistance force g₁ of the sheet concerned and in the range where the curve 203 exceeds the buckling resistance force g₁, a single sheet can be turned over reliably. It is easily understood that this region 211 is far wider than a region obtained by conversion from the curve 201.

The above-mentioned buckling resistance force g₁ can be approximated by Euler load when a sheet to be turned over is deformed in the first-order mode. The buckling resistance forces of passbooks shown in Figs. 2, 3 correspond to g₁, g₂.

The range 211 of the adequate amount of compression for steadily turning over a single sheet is not adequate if the buckling resistance force is g₂. therefore, by using the push guide 19 shown in Fig. 1, for example, it is necessary to give an initial deformation to a passbook in the first-order mode, and decrease the buckling resistance force to vary from g₂ to close to g₁.

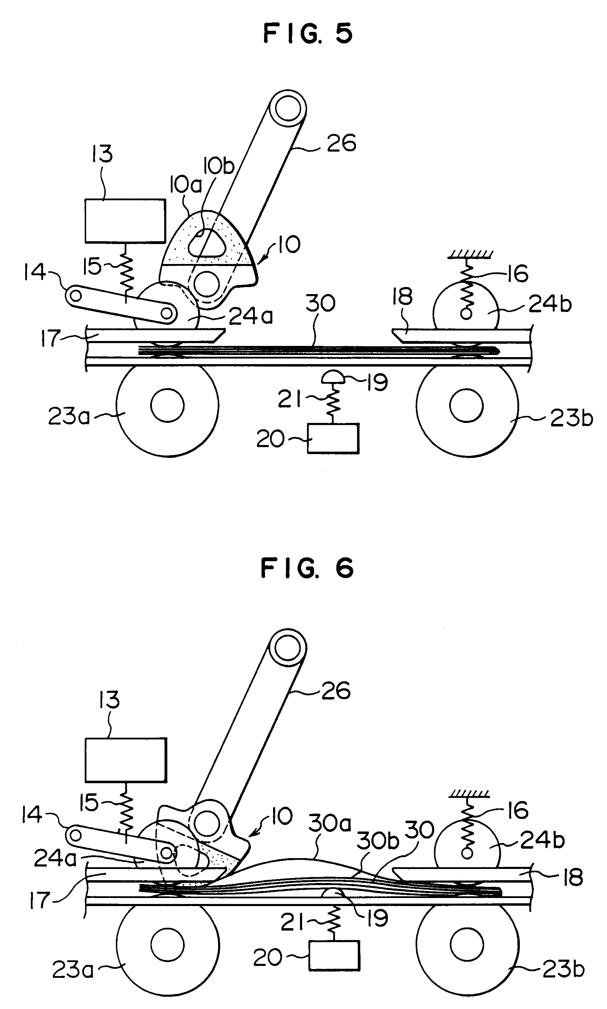

Referring to Figs. 5 to 9, the operation of turning over the top sheet of a passbook 30 will now be described. A passbook 30 is brought to a specified position (Fig. 5). As has been described with reference to Fig. 3, the buckling resistance force of the passbook 2 with an initial irregularity corresponds to g₂, greatly different from g₁ as shown in Fig. 4. For this reason, a single sheet cannot be turned over reliably, which has been described with reference to Fig. 4. By using the push guide of Fig. 6, the passbook is subjected to an initial deformation in first-order mode as shown in Fig. 6, thereby lessening the effect of the initial irregularity presented in Fig. 3. The reason why the buckling resistance force of the passbook 2 with the initial irregularity of Fig. 3 is higher than the flat passbook of Fig. 2 is because the buckling mode is represented in high-degree mode and also because a local snap through occurs. Meanwhile, the page-turning roller 10, while rotating, comes into contact with the passbook which has been subjected to the initial deformation by the push guide 19. In this process, as shown in Fig. 6, the transfer roller 24a is raised for a specified time period by an operation of the drive source 13 through the intermediary of the spring 15 and the link 14. By this motion, the transfer roller 24a is prevented from offering resistance to the sheet being turned over. The above-mentioned time period should most desirably be almost the same as a time in which the page-turning roller 10 is applying a specified force to the passbook. However, the above-mentioned time period may be longer than this and may be up to a point in time that the page-turning roller 10 has rotated to a specified position.

If the above-mentioned time is set to be substantially the same as the time in which the specified force is applied, a favorable effect is that the next sheet 30b - under the sheet which is to be turned over - is prevented from being turned over at the same time.

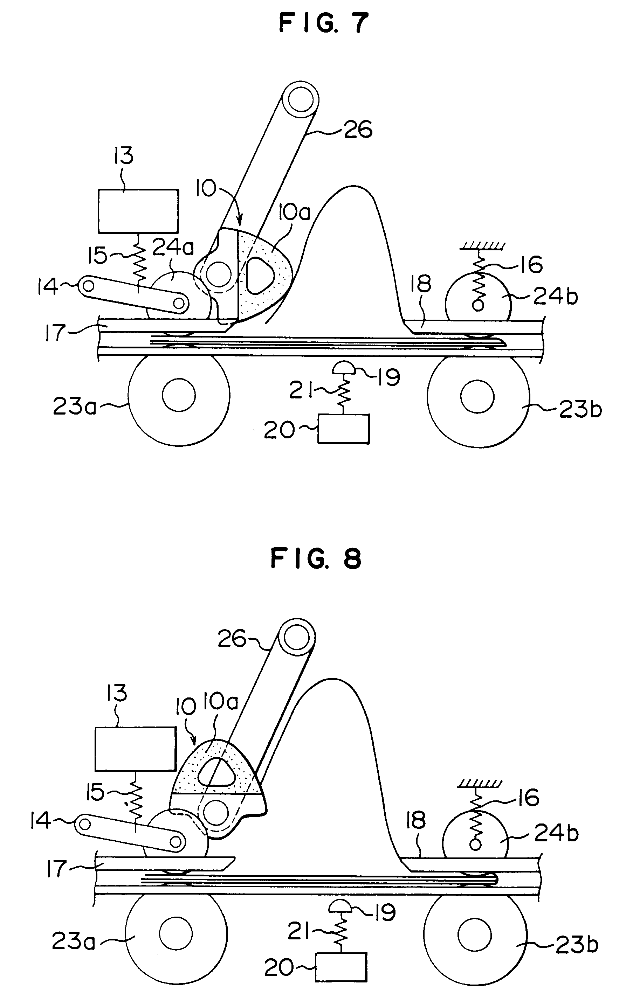

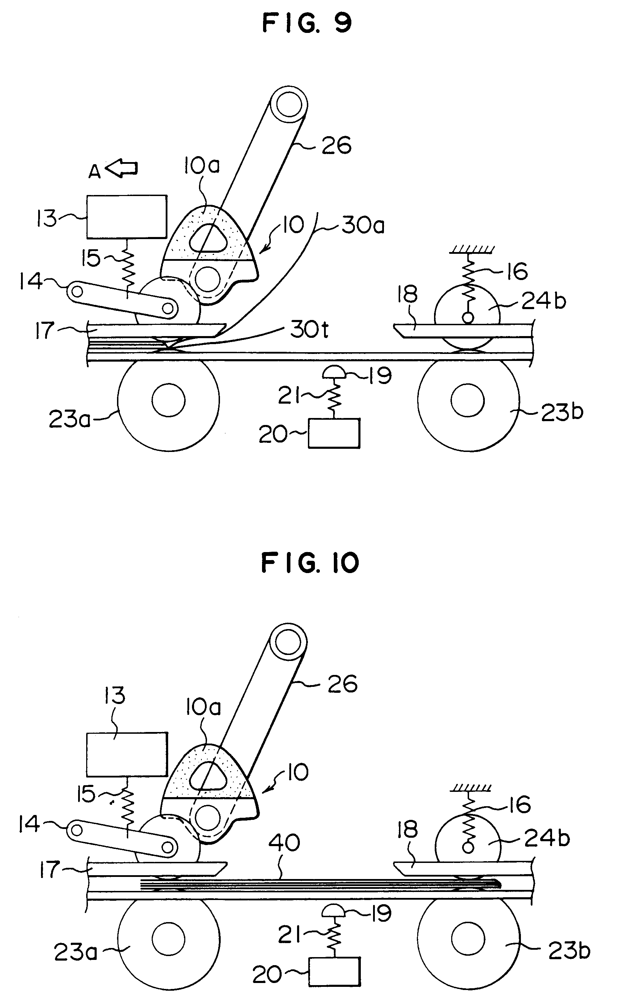

When the page-turning roller 10 has rotated for a specified angle of rotation, the push guide 19 and the transfer roller 24a finish their respective motions, and return to the initial position (Fig. 7). On completion of the rotation, the page-turning roller 10 stops at a specified position (Fig. 8). Then, the passbook is conveyed in the direction of an arrow A by the transfer rollers 23a and 24a. By this motion, the sheet 30a thus curved is turned over about the binding line, thus completing the page-turning operation (Fig. 9).

Referring to Fig. 10, description will be made of turning over of a top sheet 1a of a flat passbook or a passbook with a slight initial irregularity but with hardly any increase in the buckling resistance force (described with reference to Fig. 2) or a thin sheet (middle sheet 1c, for example) not showing a resistance force in excess of the inflection point region 210 of the curve 202 of Fig. 4 (the buckling resistance force g₂, for example) even if the buckling resistance force is increased by the effect of the initial irregularity because the original buckling force is small. To differentiate from the turning operation of the top sheet mentioned above, let us refer to the latter operation as the middle sheet turning operation.

To judge that a passbook has a very small initial irregularity or the passbook is flat, a camera, a moire fringes or an optical system is arranged in the passbook printer. In this case, an image of a three-dimensional deformation pattern of a passbook is processed, and a decision is made whether or not the out-of-plane deformation of the passbook is more than a specified amount are as follows. Cases where the out-of-plane deformation is less than the specified amount.

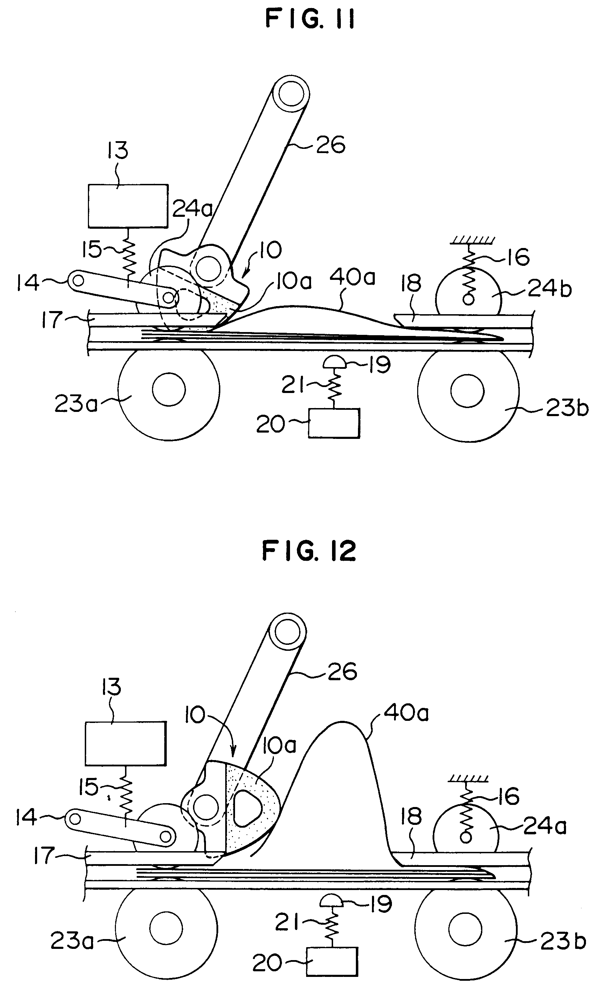

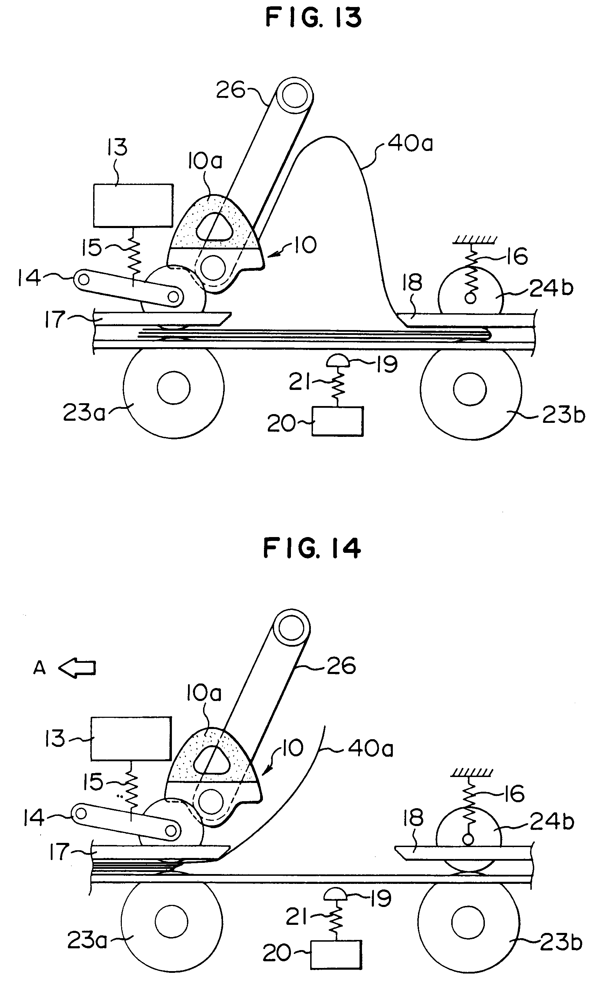

As in the case of Fig. 5, a passbook 40 is held at a specified position with a double-spread page closed (Fig. 10). While rotating, the page-turning roller 10 comes into contact with a sheet 40a. As shown in Fig. 11, the drive source 13 is operated to raise the transfer roller 24a for a specified time through the intermediary of the spring 15 and the link 14. Therefore, the transfer roller 24a is prevented from applying resistance to the sheet being turned over. The page-turning roller 10 continues to rotate (Fig. 12), and stops after making a specified angle of rotation (Fig. 13). The page-turning operation is finished by conveying the passbook in the direction of the arrow A (Fig. 14).

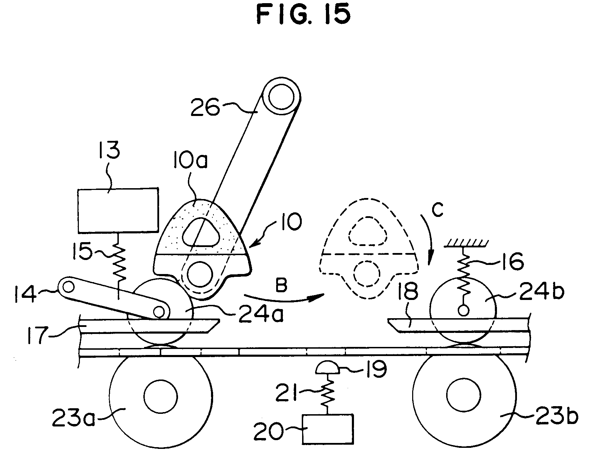

In the page-turning operation, if two or more sheets are turned over by mistake, the page-turning roller 10 is moved in the direction of an arrow B to a position indicated by broken lines as shown in Fig. 15. Then, the page-turning roller 10 is reversed in the clockwise direction C. The other motions are the same as in the page-turning operation described before. In this case, the passbook is brought out in the direction opposite to the direction A mentioned above.

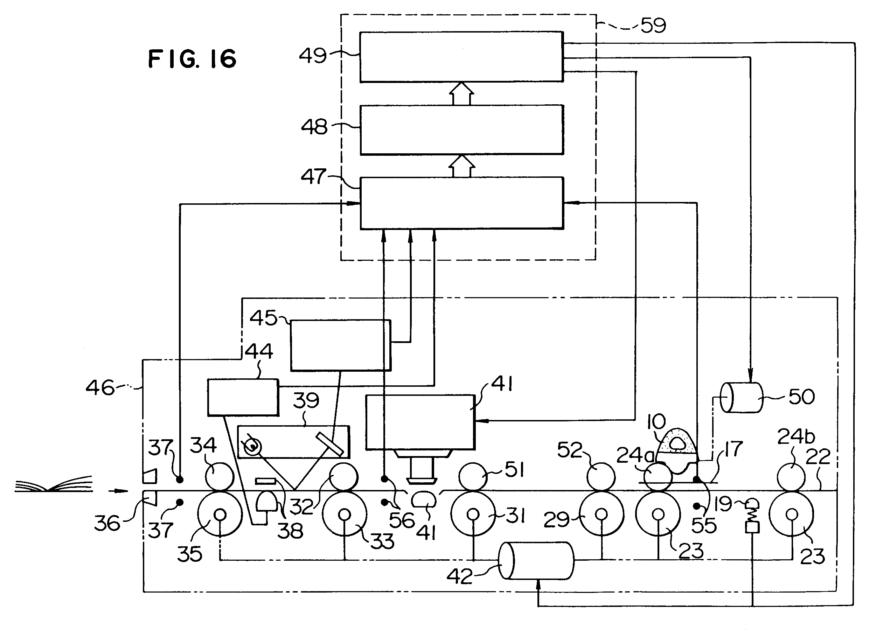

Fig. 16 is a diagram for explaining an embodiment of the passbook printer of this invention. According to this invention, the passbook printer basically comprises a transfer system including a transfer path having an inlet/outlet port 36 and a paper pan 22, transfer rollers 34, 35, 32, 33, 51, 31, 52, 29, 24a, 24b, 23a, 23b driven by a transfer drive motor 42; sensors 55, 37, 56 for recognizing the presence or absence of a passbook; a printing unit 41; an optical character recognition sensor 39 for reading information of bar codes, etc.; an optical information recognition unit 45; a magnetic information recognition sensor 38 for magnetic stripes, etc. and a magnetic information recognition unit 44; a page-turning section including a page-turning roller 10 driven by a page-turning motor 50, a paper guide 17, and a push guide 19; an external information equipment section 59 including an interface 47, an arithmetic unit 48, and an information operation unit 49; and a power supply unit and an information input/output control unit, both not shown, the latter being for information exchange with an external computer.

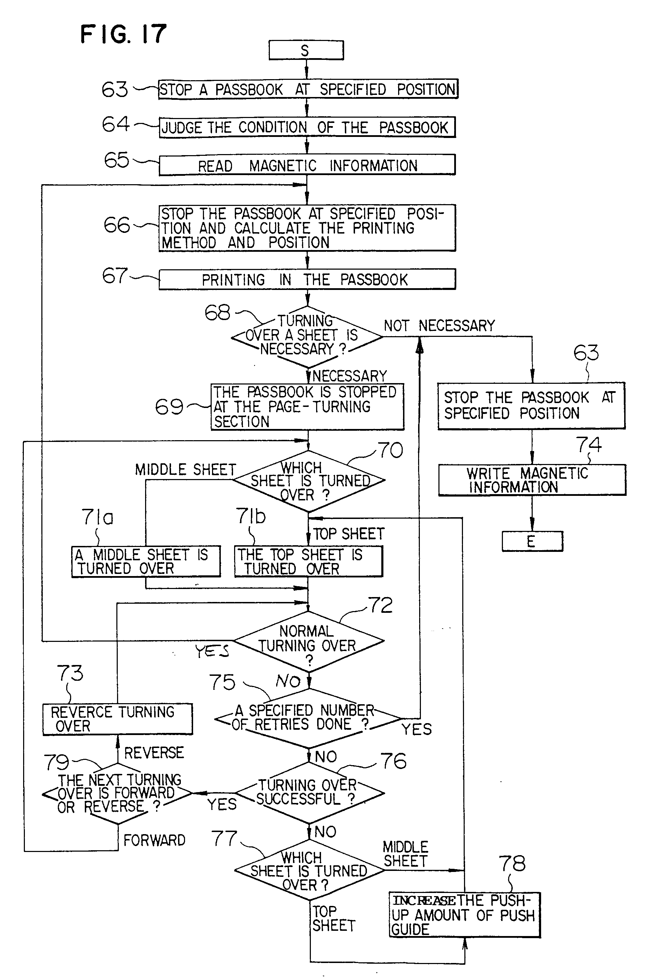

Fig. 17 is a flowchart showing an example of the operation of the passbook printer of Fig. 16. Referring to Fig. 17, the flow of the operation of the passbook will be described. To begin with, the rotation of the rollers of the transfer system is controlled, a passbook is stopped at a specified position (step 63), and information about the passbook is read by a scanning operation by a magnetic information read/write unit 38 (step 65). This step, as shown in Fig. 17, is an operation (step 64) for judging the deformation condition of the passbook by making the optical character recognition sensor 39 scan in a direction perpendicular to the passbook transfer direction. According to the above-mentioned magnetic information given by a sensor 38 and optical information given by a sensor 39, the passbook stop position and the printing method at the printer unit 41 are calculated at a central processing unit (step 66). In compliance with the result of this arithmetic operation, the passbook is stopped at a specified position, and undergoes printing by the printer unit 41 (step 67). Then, a decision is made whether or not turning over of a sheet is necessary (step 68). If a turning-over operation is necessary, in compliance with information about the kind of the passbook, etc. which have already been judged, the passbook is caused to stop at the specified stop position of the page-turning section for passbooks (step 69). According to the passbook information mentioned above, a decision is made whether a top sheet or a middle sheet is to be turned over (step 70). In compliance with this decision, a middle sheet is turned over (step 71a) or a top sheet is turned over (step 71b). Then, a decision is made by the optical character recognition sensor 39 whether or not the turning over of a sheet has been done correctly (step 72). For the sensor 55, a sensor similar to the optical character recognition sensor 39 may be used, and the above-mentioned decisions may be made at the page-turning section for passbooks.

If the sheet has been turned over correctly, the stop position and the printing method of the passbook at the printer unit 41 are calculated again by the central processing unit (step 66). According to the result of this arithmetic operation, the passbook is stopped at a specified position and undergoes printing by the printer unit 41 (step 67). Next, a decision is made whether or not another page-turning is necessary (step 68). If it is necessary, the above-mentioned operations are repeated.

If another turning over of a sheet is necessary according to the decision (step 68), the passbook is stopped at the specified position (step 63), necessary magnetic information is written in the passbook, the passbook is brought out of the page-turning section, by which a series of the page-turning operations have been finished.

If the turning over of a sheet was not done correctly according to the decision (step 72) about the page-turning operation, a retry is performed. In a retry operation, the number of retries is counted (step 75). If the number does not reach a specified number, the page-turning operation is performed again (step 70).

If the number of retries is less than a specified number, a decision is made whether in the abnormal turning operation, a leaf has been turned over or not (step 76). According to the result of this decision, a decision is made whether in forward or reverse direction the next turning operation is to be done (step 79). For example, if two or more sheet have been turned over, a reverse turning operation is performed (step 73) as shown in Fig. 15. A decision is made again the leaf has been turned over normally (step 72), and according to the result of this decision, the subsequent steps are performed as described above. When the above-mentioned decision (step 79) on the turning direction indicates that the next turning direction needs to be forward, a decision is made whether a top sheet or a middle sheet is turned over (step 70). Thereafter, the same subsequent steps as mentioned above are performed.

If the decision (step 76) of whether or not a sheet has been turned over in the abnormal turning operation indicates that a sheet has not been turned over, the following two kinds of retries are carried out. If a sheet-turning error occurs in a middle-sheet turning operation, as in the front-sheet turning operation, the push guide 19 is pushed to reduce the buckling resistance force of the passbook, then a top sheet is turned over (step 71b). If a turning error occurs in the front-sheet turning operation, the push-up amount of the push guide 19 is controlled to increase (step 78), and the front-sheet is turned over (step 71b). Hereafter, the subsequent steps are performed as mentioned above. If the decision (step 68) about whether or not turning over of a sheet is necessary indicates that a sheet need not be turned over, the passbook is stopped at the specified position (step 63), magnetic information is written in the passbook (step 74). In this manner, the page-turning operation is finished, and the passbook is brought out of the apparatus.

According to this invention, there is provided a highly reliable printer for passbooks or the like, such as passbooks, which can perform stably turn over the sheets in spite of their initial irregularity in shape or the various thickness.

## Claims

1. A page-turning apparatus, comprising
- a transfer path (25) along which a passbook or the like is transferred by transfer means (23, 14),
- page-turning means (10, 11, 12, 26) for coming into contact with and turning over a specified sheet (1a, 1b, 1c) of the passbook or the like which is brought in on the transfer path (25), and
- means (19, 20, 21), arranged in a position separate from a start position of the page-turning means (10, 11, 12, 26) when turning over a sheet, for giving an initial deformation to the passbook or the like,
**characterized** in further comprising
means (39, 45, 59) for judging the deformation condition of the passbook or the like prior to the initial deformation.

2. An apparatus according to claim 1,
characterized in that
the means (19, 20, 21) for giving an initial deformation to the passbook or the like is arranged across the transfer path (25) from the page-turning means (10, 11, 12, 26).

3. An apparatus according to claim 1 or 2,
characterized in that
the means (19, 20, 21) for giving the initial deformation to the passbook or the like is structured to bend the passbook in the out-of-plane direction so that the passbook is bent in the first-order mode.

4. An apparatus according to one of the claims 1 to 3,
characterized in further comprising
means for controlling the amount of deformation caused by the means (19, 20, 21) for giving the initial deformation to the passbook or the like in accordance with the kind of a specified sheet to be turned over of the passbook or the like.

5. An apparatus according to claim 1,
characterized in further comprising
- means for making a decision of whether the page-turning operation is normal or abnormal in synchronism with the page-turning operation by said page-turning means (10, 11, 12, 26),
- means for counting the number of a series of page-turning operations, and
- means for controlling the page-turning operation according to the count of the counting means.

6. An apparatus according to one of the claims 1 to 5,
characterized in that
the initial deformation excerted on the passbook or the like is variable in accordance with the deformation condition of the passbook or the like.

7. A printer for passbooks or the like, comprising
- a transfer path (25) having transfer means for transferring the passbook or the like (1, 30),
- printing means (41) for printing on a specified page of the passbook or the like brought in on the transfer path (25),
- means (38) for reading and writing magnetic information on the passbook or the like, and
- a page-turning apparatus according to one of the claims 1 to 6.

## Patentansprüche

1. Seitenumblättervorrichtung mit
- einem Transportweg (25), längs dessen ein Sparbuch oder ähnliches durch eine Transporteinrichtung (23, 14) transportiert wird,
- einer Seitenumblättereinrichtung (10, 11, 12, 26), die mit einem bestimmten Blatt (1a, 1b, 1c) des Sparbuchs oder ähnlichem, das auf dem Transportweg angelangt, in Kontakt kommt und diese umblättert, und
- einer Einrichtung (19, 20, 21), die an einer anderen Position als die Startposition der Seitenumblättereinrichtung (10, 11, 12, 26) beim Umblättern einer Seite angebracht ist, um dem Sparbuch oder ähnlichem eine anfängliche Deformation zu verleihen,
**gekennzeichnet durch**
eine Einrichtung (39, 45, 59) zur Beurteilung des Verformungszustands des Sparbuchs oder ähnlichem vor der anfänglichen Deformation.

2. Vorrichtung nach Anspruch 1,
dadurch gekennzeichnet, daß
die Einrichtung (19, 20, 21), mit der dem Sparbuch oder ähnlichem eine anfängliche Deformation verliehen wird, über den Transportweg (25) der Seitenumblättereinrichtung (10, 11, 12, 26) hinweg angebracht ist.

3. Vorrichtung nach Anspruch 1 oder 2,
dadurch gekennzeichnet, daß
die Einrichtung (19, 20, 21), mit der dem Sparbuch oder ähnlichem eine anfängliche Deformation verliehen wird, so aufgebaut ist, daß sie das Sparbuch in Richtung aus der Ebene heraus biegt, so daß das Sparbuch im Modus erster Ordnung gebogen wird.

4. Vorrichtung nach einem der Ansprüche 1 bis 3,
weiter gekennzeichnet durch
eine Einrichtung zur Steuerung der Deformation, die durch die Einrichtung (19, 20, 21), mit der einem Sparbuch oder ähnlichem eine anfängliche Deformation verliehen wird, bewirkt wird nach Maßgabe der Art eines bestimmten umzublätternden Blatts des Sparbuchs oder ähnlichem.

5. Vorrichtung nach Anspruch 1,
weiter gekennzeichnet durch
- eine Einrichtung zur Entscheidung, ob der Seitenumblättervorgang normal oder anormal verläuft, synchron zum Seitenumblättervorgang durch die Seitenumblättereinrichtung (10, 11, 12, 26),
- eine Einrichtung zur Zählung der Anzahl einer Folge von Seitenumblättervorgängen und
- eine Einrichtung zur Steuerung des Seitenumblättervorgangs entsprechend dem Zählstand der Zähleinrichtung.

6. Vorrichtung nach einem der Ansprüche 1 bis 5, dadurch gekennzeichnet, daß die anfänglich auf das Sparbuch oder ähnliches ausgeübte Deformation in Abhängigkeit vom Deformationszustand des Sparbuchs oder ähnlichem variabel ist.

7. Drucker für Sparbücher oder ähnliches, mit
- einem Transportweg (25) mit einer Transporteinrichtung zum Transportieren des Sparbuchs oder ähnlichem (1, 30),
- einer Druckeinrichtung (41) zum Drucken auf ein bestimmtes Blatt des Sparbuchs oder ähnlichem, das auf dem Transportweg (25) angelangt,
- einer Einrichtung (38) zum Lesen und Schreiben magnetischer Informationen im Sparbuch oder ähnlichem, und
- einer Seitenumblättervorrichtung nach einem der Ansprüche 1 bis 6.

## Revendications

1. Dispositif tourne-page, comprenant
- un parcours de transfert (25) sur lequel un livret bancaire ou autre est transporté par un moyen de transfert (23, 14),
- un moyen tourne-page (10, 11, 12, 26), conçu pour venir contre et tourner une feuille donnée (1a, 1b, 1c) du livret bancaire ou autre introduit sur le parcours de transfert (25), et
- un moyen (19, 20, 21) situé à l'écart d'une position de départ des moyens tourne-page (10, 11, 12, 26) lors du retournement d'une feuille, pour donner une déformation initiale au livret bancaire ou autre,
caractérisé en ce qu'il comporte en outre
un moyen (39, 45, 59) pour juger l'état de déformation du livret bancaire ou autre avant la déformation initiale.

2. Dispositif selon la revendication 1,
caractérisé en ce que
le moyen (19, 20, 21) pour donner une déformation initiale au livret bancaire ou autre est disposé en travers du parcours de transfert (25) à partir du moyen tourne-page (10, 11, 12, 26).

3. Dispositif selon la revendication 1 ou 2,
caractérisé en ce que
le moyen (19, 20, 21) pour donner la déformation initiale au livret bancaire ou autre a une structure servant à courber le livret bancaire dans une direction hors-plan de façon que le livret bancaire soit courbé en mode de premier ordre.

4. Dispositif selon l'une des revendications 1 à 3,
caractérisé en ce qu'il comporte en outre
un moyen pour commander la valeur de la déformation provoquée par le moyen (19, 20, 21) pour donner la déformation initiale au livret bancaire ou autre en fonction de la nature d'une feuille donnée, à tourner, du livret bancaire ou autre.

5. Dispositif selon la revendication 1,
caractérisé en ce qu'il comporte en outre
- un moyen pour décider si l'opération consistant à tourner une page est normale ou anormale, en synchronisme avec l'opération consistant à tourner une page effectuée par ledit moyen tourne-page (10, 11, 12, 26),
- un moyen pour compter les opérations d'une série d'opérations consistant à tourner une page, et
- un moyen pour commander l'opération consistant à tourner une page selon la valeur comptée par le moyen de comptage.

6. Dispositif selon l'une des revendications 1 à 5,
caractérisé en ce que
la déformation initiale exercée sur le livret bancaire ou autre est variable selon l'état de déformation du livret bancaire ou autre.

7. Imprimante pour livrets bancaires ou autres, comprenant
- un parcours de transfert (25) ayant un moyen de transfert pour transporter le livret bancaire ou autre (1, 30),
- un moyen d'impression (41) pour imprimer sur une page donnée du livret bancaire ou autre introduite sur le parcours de transfert (25),
- un moyen (38) pour lire et écrire des informations magnétiques sur le livret bancaire ou autre, et
- un dispositif tourne-page selon l'une des revendications 1 à 6.
